# EUROPEAN PATENT APPLICATION

(11) **EP 4 607 254 A1**
(43) Date of publication of application: **27.08.2025**
(21) Application number: 24220958.3
(22) Date of filing: 18.12.2024
(51) Int. Cl.: G02B 6/124, G02B 6/34, G02B 6/12

(54) **OPTICAL GRATING CONFIGURED TO EMIT AN OPTICAL BEAM HAVING A PREDETERMINED CROSS-SECTION AND AN PREDETERMINED INTENSITY PATTERN OVER SUCH CROSS-SECTION**

(30) Priority: 26.02.2024 US 202418587135
(71) Applicant: Honeywell International Inc., Charlotte, NC 28202 (US)
(72) Inventor: PUCKETT, Matthew Wade, Charlotte, 28202 (US); FERTIG, Chad, Charlotte, 28202 (US); HORSTMAN, Luke, Charlotte, 28202 (US); NELSON, Karl D., Charlotte, 28202 (US)
(74) Representative: Haseltine Lake Kempner LLP

(57) **Abstract**

An optical grating is provided which can be configured to emit an optical beam, from optical grating portions of the optical grating, with a predetermined cross-section and/or a predetermined intensity in a portion of the cross-section including light.

## Description

### STATEMENT REGARDING FEDERALLY SPONSORED RESEARCH OR DEVELOPMENT

This invention was made with Government support under contract number N00014-22-C-1043, awarded by the Office of Naval Research. The Government has certain rights in the invention.

### BACKGROUND

A conventional optical grating generates optical beams emitted from the optical grating that have non-optimal cross-sections, e.g., rectangular, and optical intensity over such cross-section. Performance of a system, e.g., an atomic sensor for example an atomic clock, utilizing one or more optical beams may be improved by having a tailoring a cross-section of the optical beam and an optical intensity where there is light in such a cross-section.

### SUMMARY

In some aspects, the techniques described herein relate to an optical grating in a plane defined by a first axis and a second axis orthogonal to the first axis, configured to receive at an optical grating input of the optical grating a collimated optical signal propagating parallel to the first axis, further configured to emit an optical beam from an aperture of the optical grating, the optical grating including: a N optical waveguides each of which includes a waveguide input, a waveguide end, and an optical grating portion including a grating input and a grating end, wherein N is an integer greater than one, wherein the aperture is defined by optical grating portions; wherein each optical waveguide is in the plane and parallel with each of other optical waveguides of the N optical waveguides; and at least one of: (a) at least one of: (i) wherein each grating input of two or more of the N optical waveguides is located at different positions along or parallel to the first axis; and (ai) wherein each grating end of at least two of the N optical waveguides is located at different positions along or parallel to the first axis; and (b) wherein a grating amplitude differs between at least two optical grating portions at at least one position along or parallel to the second axis; wherein each optical waveguide whose optical grating portion commences after to the waveguide input along or parallel to the first axis further includes an input optical waveguide portion which has no optical gratings and which optically connects the waveguide input to the grating input.

In some aspects, the techniques described herein relate to a method for emitting an optical beam from an optical grating, the method including: receiving, at an optical grating input of the optical grating, a collimated optical signal propagating parallel to a first axis; and emitting the optical beam from an aperture of the optical grating; wherein the optical grating is in a plane defined by the first axis and a second axis orthogonal to the first axis and includes: a N optical waveguides each of which includes a waveguide input, a waveguide end, and an optical grating portion including a grating input and a grating end, wherein N is an integer greater than one, wherein the aperture is defined by optical grating portions; wherein each optical waveguide is in the plane and parallel with each of other optical waveguides of the N optical waveguides; at least one of: (a) at least one of: (i) wherein each grating input of two or more of the N optical waveguides is located at different positions along or parallel to the first axis; and (ii) wherein each grating end of at least two of the N optical waveguides is located at different positions along or parallel to the first axis; and (b) wherein a grating amplitude differs between at least two optical grating portions at at least one position along or parallel to the second axis; wherein each optical waveguide whose optical grating portion commences after to the waveguide input along or parallel to the first axis further includes an input optical waveguide portion which has no optical gratings and which optically connects the waveguide input to the grating input.

In some aspects, the techniques described herein relate to an optical grating in a plane defined by a first axis and a second axis orthogonal to the first axis, configured to receive at an optical grating input of the optical grating a collimated optical signal propagating parallel to the first axis, further configured to emit an optical beam from optical grating portions of the optical grating, the optical grating including: a N optical waveguides each of which includes a waveguide input, a waveguide end, and an optical grating portion including a grating input and a grating end, wherein N is an integer greater than one; wherein each optical waveguide is in the plane and parallel with each of other optical waveguides of the N optical waveguides; and at least one of: (a) wherein each grating input of two or more of the N optical waveguides is located at different positions along or parallel to the first axis; and (b) wherein each grating end of at least two of the N optical waveguides is located at different positions along or parallel to the first axis; and wherein a grating amplitude differs between at least two optical grating portions at at least one position along or parallel to the second axis; wherein each optical waveguide whose optical grating portion commences after to the waveguide input along or parallel to the first axis further includes an input optical waveguide portion which has no optical gratings and which optically connects the waveguide input to the grating input.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
FIG. 1A illustrates a plan view of an exemplary optical grating configured to emit an optical beam having a predetermined cross-sectional shape and/or an predetermined optical intensity across the cross-section where light is present;
FIG. 1B illustrates diagram of a cross-section of an exemplary optical grating according to embodiments of the invention which is emitting an optical beam having the predetermined cross-section shape and the optical intensity where light is present in the cross-sectional shape;
FIG. 1C illustrates a diagram of an exemplary cross-section of an optical beam emitted by the optical grating;
FIG. 2A illustrates a plan view of an optical waveguide of the optical grating;
FIG. 2B illustrates a cross-sectional diagram of one embodiment of an optional input optical waveguide portion;
FIG. 2C illustrates a cross-sectional diagram of one embodiment of an optical grating portion;
FIG. 2D illustrates another cross-sectional diagram of one embodiment of the optical gratings; and
FIG. 3 illustrates a flow diagram of one embodiment of a method for emitting an optical beam from an optical grating made according to embodiments of the invention.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that structural, mechanical, and/or electrical changes may be made. Furthermore, each method presented in the drawing figures and the specification is not to be construed as limiting the order in which the individual steps may be performed. The following detailed description is not to be taken in a limiting sense.

Embodiments of the invention are optical grating which can emit an optical beam with a predetermined cross-section and/or a predetermined optical intensity across portion(s) of the cross-section which include light. The optical grating is in a plane defined by first (X) and second (Y) axes, wherein the first and the second axes are orthogonal. The material medium of which the waveguides are composed extends into the (Z) direction. The optical beam is created from a collimated optical signal received by an optical grating input of the optical grating. The optical beam is emitted from a surface of optical grating. The cross-section of the optical beam may include one or more closed regions containing light, e.g., a circle, an ellipse, two parallel lines of light, a letter, a number, etc.

To achieve a predetermined cross-section of an emitted optical beam, embodiments of the invention include an optical grating with an aperture whose perimeter has a predetermined shape. The optical grating including N optical waveguides in parallel with one another. N is an integer greater than one. The N optical waveguides includes a first optical waveguide through an Nth optical waveguide. Each optical waveguide includes an optical grating portion which includes sub-wavelength periodic structures formed on an optical waveguide. The aperture is defined by the optical grating portion of the optical grating.

In embodiments of the invention, the predetermined optical intensities across portion(s) of the cross-section which includes light may also be varied. In embodiments of the invention, such variation in optical intensity may be achieved by varying a grating amplitude of an optical grating along or parallel to both each of the first and the second axes.

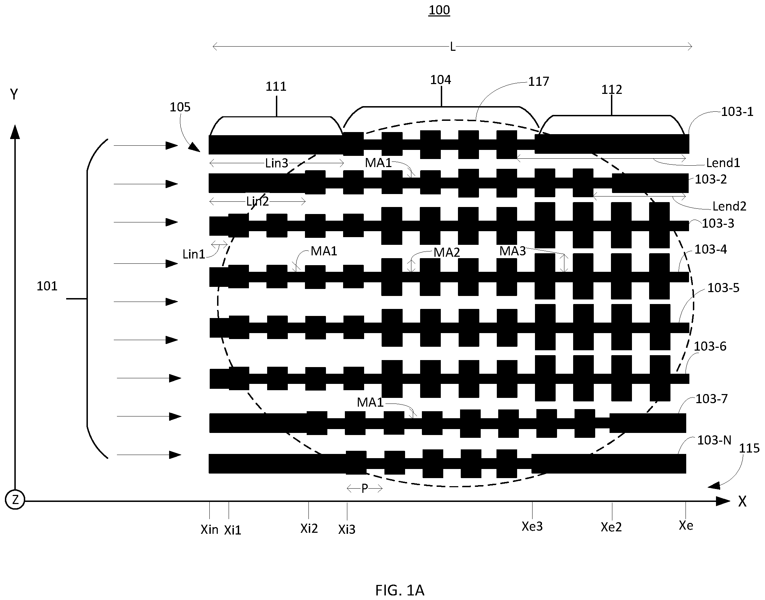

Optionally, a grating amplitude differs between at least two optical grating portions at at least one position along or in parallel to the second axis. Optionally, as illustrated in FIG. 1A:
(a) the optical grating input 105 (i.e., each optical waveguide input) of the optical grating 100 is located along the X axis at Xin;
(b) an optical grating input of each of three optical waveguides 103-4, 103-5, 103-6 is located along the X axis at Xi1;
(c) an optical grating input of each of two optical waveguides 103-2, 103-7 is located along the X axis at Xi2;
(d) an optical grating input of each of two optical waveguides 103-1, 103-N is located along the X axis at Xi3;
(e) an optical grating output of each of three optical waveguides 103-4, 103-5, 103-6 is located along the X axis at Xe;
(f) an optical grating output of each of two optical waveguides 103-2, 103-7 is located along the X axis at Xe2; and
(g) an optical grating output of each of two optical waveguides 103-1, 103-N is located along the X axis at Xe3;
(h) an optional input optical waveguide portion 111 of each of two optical waveguides 103-1, 103-N commences on the X axis at Xin and has a length of Lin3;
(i) an optional input optical waveguide portion 111 of each of two optical waveguides 103-2, 103-7 commences on the X axis at Xin and has a length of Lin2;
(j) an optional input optical waveguide portion 111 of each of three optical waveguides 103-3, 103-4, 103-5 commences on the X axis at Xin and has a length of Lin 1;
(k) an optional end optical waveguide portion 112 of each of two optical waveguides 103-1, 103-N commences on the X axis at Xe1 and has a length of Lend1; and
(l) an optional end optical waveguide portion 112 of each of two optical waveguides 103-2, 103-7 commences on the X axis at Xe2 and has a length of Lend2.
Optionally, the grating amplitude of each optical grating portion increases along or parallel to the first axis.

FIG. 1A illustrates a plan view of an exemplary optical grating configured to emit an optical beam having a predetermined cross-sectional shape and/or a predetermined optical intensity across the cross-section where light is present (or optical grating) 100. The optical grating 100 includes N optical waveguides 103-1, 103-2, 103-3, 103-4, 103-5, 103-6, 103-7, 103-N. N is an integer greater than two. Each optical waveguide includes a periodic optical grating portion 104 in at least a part of the optical waveguide, an optional input optical waveguide portion 111, and an optional end optical waveguide portion 112. For pedagogical purposes, each optical waveguide illustrated in FIG. 1A is illustrated as including an optional input optical waveguide portion 111. Each of the optional input and optional end optical waveguide portions 111, 112 does not include any optical gratings. Optionally, the optical grating 100 is on, e.g., is formed on, a substrate 115.

The optical grating 100 is configured to receive a collimated optical signal 101¹ incident upon an optical grating input 105 of the optical grating 100 and to transform the collimated optical signal 101 to an optical beam emitted from the optical grating 100. The third axis is orthogonal to each of the first (X) and the second (Y) axes.
¹ The collimated optical signal is illustrated as propagating in an X axis in FIG. 1A

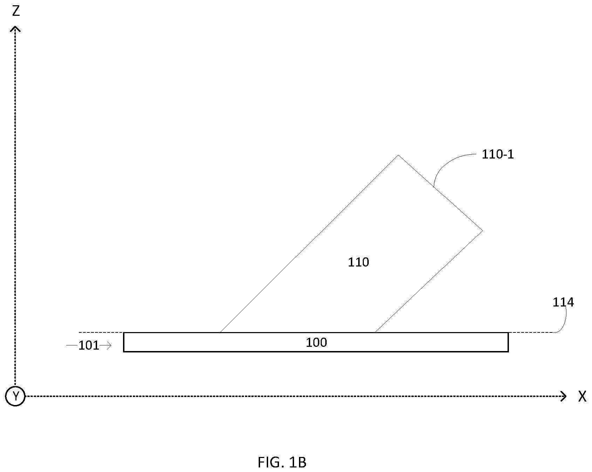

FIG. 1B illustrates diagram of a cross-section of an exemplary optical grating 100 according to embodiments of the invention which is emitting an optical beam 110 having the predetermined cross-section shape 110-1 and the optical intensity where light is present in the cross-sectional shape 110-1. The optical beam 110 has a component in the third (Z) axis and optionally a component in the first (X) axis. The optical grating 100 is in a plane 114 defined by first (X) and second (Y) axes. Although FIG. 1B illustrates a single optical beam 110, . embodiments of the invention can emit more than one optical beam in different directions from the optical grating, e.g., the optical grating portions.

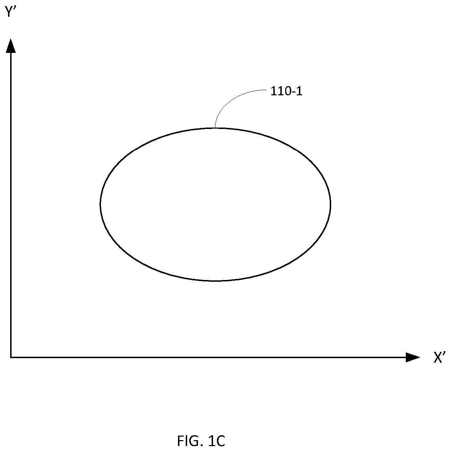

FIG. 1C illustrates a diagram of an exemplary cross-section shape 110-1 of an optical beam emitted by the optical grating 100. For pedagogical purposes, the illustrated cross-sectional shape 110-1 is elliptical with a constant optical intensity where light is present in the cross-sectional shape 110-1. The cross-sectional shape of an emitted optical beam is not necessarily the same as a cross-section of the grating portions. However, the cross-sectional shape may be any shape, e.g., a circle, a letter, a number, etc. The illustrated cross-section shape 110-1 is in a plane defined by a fourth axis (X') and a fifth axis (Y'), where the fourth and fifth axes are orthogonal.

Returning to FIG. 1A, a length of each of two or more optical grating portions 104 may differ; thus, (a) a position of where each grating input of the two or more optical grating portions may differ and/or (b) a position of where each of where each grating end of the two or more optical grating portions may differ. The length of an optical grating is the length L of an optical waveguide less a sum of (a) a length Lin_n of an input optical waveguide portion (if used) and (b) a length Lend_n of an end optical waveguide portion (if used). An input optical waveguide portion and/or an end optical waveguide portion are optionally part of each optical waveguide. The optical gratings portions define the aperture 117.

The period P of an optical grating portion 104 of each of the N optical waveguides 103-1, 103-2, 103-3, 103-4, 103-5, 103-6, 103-7, 103-N may or may not be the same. The period P is a function of the wavelength of a collimated optical signal incident upon the optical grating 100 and the desired output direction of one or more optical beams emitted from the grating portions; each of more than one optical beam can be emitted in different directions from the grating portions.

Each period of the N optical waveguides 103-1, 103-2, 103-3, 103-4, 103-5, 103-6, 103-7, 103-N has a modulation amplitude MA1, MA2, MA3. For pedagogical purposes, each optical grating portion 104 is illustrated as being implemented with an optical waveguide whose width² is periodically diminished and expanded. Optionally, each end waveguide portion and each input waveguide portion have the same height along or parallel to the third axis as each input waveguide portion.
² In FIG. 1A, width is along the Y axis.

However, the optical grating portions 104 may be implement in other ways, e.g., periodic recesses in a height of each of the N optical waveguides 103-1, 103-2, 103-3, 103-4, 103-5, 103-6, 103-7, 103-N. Thus, a modulation amplitude may be implemented differently for each different type of optical grating portion. For example, for an optical grating portion formed by such recesses, the modulation amplitude is a depth of each recess. For pedagogical purposes, embodiments of the invention are illustrated using the grating structure illustrated in FIG. 1A.

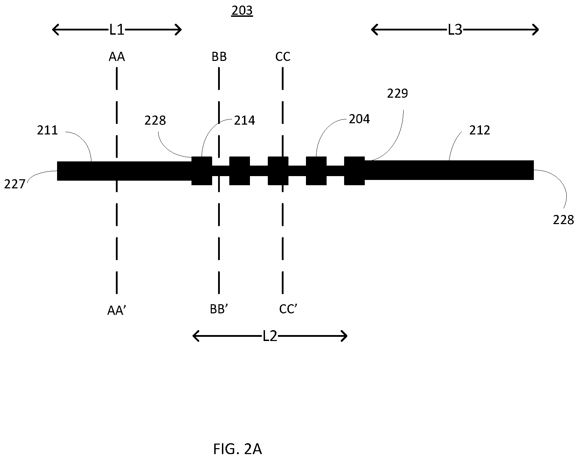

The structure of the N optical waveguides 103-1, 103-2, 103-3, 103-4, 103-5, 103-6, 103-7, 103-N illustrated in FIG. 1A will be further described. FIG. 2A illustrates a plan view of an optical waveguide 203 of the optical grating 100. The optical waveguide 203 includes the optional input optical waveguide portion 211, the optical grating portion 214, and an optional end optical waveguide portion 212. The optional input optical waveguide portion 211 has a first length L1. The optical grating portion 204 has a second length L2. The optional end optical waveguide portion 212 has a third length L3. Each of the first and third lengths L1, L3 is equal to or greater than zero; The first length L1 may or may not equal the third length L3. The second length L2 is greater than zero.

Each optical grating portion 214 includes an optical grating input 228 and an optical grating end 229. Each of the N optical waveguides 103-1, 103-2, 103-3, 103-4, 103-5, 103-6, 103-7, 103-N includes an optical waveguide input 227. The optical waveguide input 227 of each of the N optical waveguides 103-1, 103-2, 103-3, 103-4, 103-5, 103-6, 103-7, 103-N is either an input of the optional input optical waveguide portion 211 or an optical grating input 228 of the optical grating portion 214 if the optical waveguide does not include the optional input optical waveguide portion 211. The optical grating input 105 includes an optical waveguide input 227 of each of the N optical waveguides 103-1, 103-2, 103-3, 103-4, 103-5, 103-6, 103-7, 103-N.

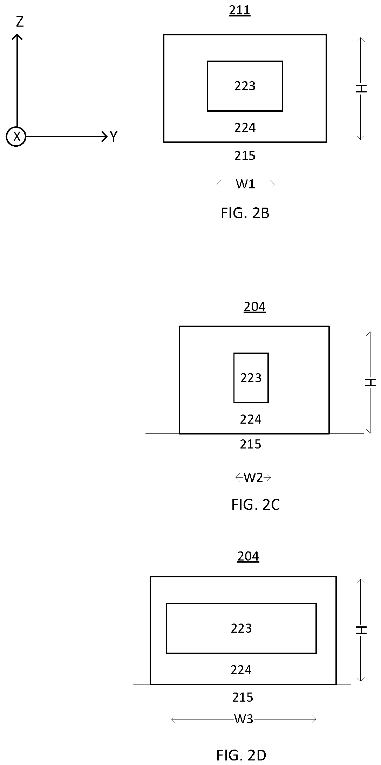

FIG. 2B illustrates a cross-sectional diagram of one embodiment of an optional input optical waveguide portion 211, e.g., at line AA-AA' in FIG. 2A. For pedagogical purposes, the optional optical waveguide portions and optical grating portion are illustrated herein as being formed with planar optical waveguide. However, such components may be formed with other types of optical waveguide, e.g., optical fiber. Optionally, the optional input optical waveguide portion 211 includes a core 223 surrounded by a cladding 224. Optionally, the optional input optical waveguide portion 211 is on the substrate 215. An index of refraction of the core 223 is greater than the index of refraction of the cladding 224. Optionally, the core 223 is formed with silicon nitride. Optionally, the cladding 224 is formed with silicon dioxide. The illustrated cross-section of a core of the optional input optical waveguide portion 211 has a first width W1.

FIG. 2C illustrates a cross-sectional diagram of one embodiment of an optical grating portion 204, e.g., at line BB-BB' in FIG. 2A. The cross-section of the optical grating portion 204 illustrated is FIG. 2C is similar to the cross-section of the optional optical transmission line, except that a second width W2 of the core of the cross-section is less than the first width W1.

FIG. 2D illustrates another cross-sectional diagram of one embodiment of the optical grating portion 204, e.g., at line CC-CC' in FIG. 2A. The cross-section of the optical grating portion 204 illustrated is FIG. 2D is similar to the cross-sections illustrated in FIGS. 2B and 2C, except that a third width W3 of the core of the cross-section illustrated in FIG. 2D is greater than each of the first width W1 and the second width W3.

Returning to FIG. 1A, the grating strength, which is a function of grating amplitude, of optical gratings of an optical waveguide may vary or constant in each of the N optical waveguides 103-1, 103-2, 103-3, 103-4, 103-5, 103-6, 103-7, 103-N.

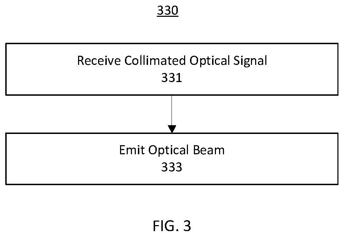

FIG. 3 illustrates a flow diagram of one embodiment of a method 330 for emitting an optical beam from an optical grating made according to embodiments of the invention. The methods illustrated herein may be implemented with the optical grating 100 illustrated and described with respect to Figures 1A-2D, but may be implemented in other ways as well, e.g., using other types of grating structures.

The blocks of the flow diagrams have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

In block 331, a collimated optical signal is received at an input of the embodiments of the optical gratings described elsewhere herein. In block 333, an optical beam is emitted from an aperture of the optical gratings as described elsewhere herein.

While the present teachings have been illustrated with respect to one or more implementations, alterations and/or modifications can be made to the illustrated examples without departing from the scope of the appended claims. In addition, while a particular feature of the present disclosure may have been described with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and/or the claims, such terms are intended to be inclusive in a manner similar to the term "comprising." The term "at least one of" is used to mean one or more of the listed items can be selected. As used herein, the term "one or more of" with respect to a listing of items such as, for example, A and B or A and/or B, means A alone, B alone, or A and B. The term "at least one of" is used to mean one or more of the listed items can be selected.

Terms of relative position as used in this application are defined based on a plane parallel to the conventional plane or working surface of a material (e.g., a layer or a substrate), regardless of orientation. Terms such as "on," "higher," "lower," "over," "top," and "under" are defined with respect to the conventional plane or working surface being on the top surface of a layer or substrate, regardless of orientation. The terms "about" or "substantially" indicate that the value or parameter specified may be somewhat altered, as long as the alteration does not result in nonconformance of the process or structure to the illustrated embodiment. Finally, "exemplary" indicates the description is used as an example, rather than implying that it is an ideal. Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

### Example Embodiments

Example 1 includes an optical grating in a plane defined by a first axis and a second axis orthogonal to the first axis, configured to receive at an optical grating input of the optical grating a collimated optical signal propagating parallel to the first axis, further configured to emit an optical beam from an aperture of the optical grating, the optical grating comprising: a N optical waveguides each of which comprises a waveguide input, a waveguide end, and an optical grating portion comprising a grating input and a grating end, wherein N is an integer greater than one, wherein the aperture is defined by optical grating portions; wherein each optical waveguide is in the plane and parallel with each of other optical waveguides of the N optical waveguides; and at least one of: at least one of: wherein each grating input of two or more of the N optical waveguides is located at different positions along or parallel to the first axis; and wherein each grating end of at least two of the N optical waveguides is located at different positions along or parallel to the first axis; and (b) wherein a grating amplitude differs between at least two optical grating portions at at least one position along or parallel to the second axis; wherein each optical waveguide whose optical grating portion commences after to the waveguide input along or parallel to the first axis further comprises an input optical waveguide portion which has no optical gratings and which optically connects the waveguide input to the grating input.

Example 2 includes the optical grating of Example 1, wherein the grating amplitude varies along or parallel to the first axis in at least one optical grating portion.

Example 3 includes the optical grating of Example 2, wherein the grating amplitude of each optical grating portion increases along or parallel to the first axis.

Example 4 includes the optical grating of any of Examples 1-3, wherein each end waveguide portion and each input waveguide portion have same height along or parallel to a third axis as each input waveguide portion, wherein the third axis is orthogonal to each of the first and the second axes.

Example 5 includes the optical grating of any of Examples 1-4, wherein each of the N optical waveguides comprises planar optical waveguide.

Example 6 includes the optical grating of any of Examples 1-5, wherein each of the optical grating portion comprises periodically expanding and diminishing a width of optical waveguide, wherein the width is along or parallel to the second axis.

Example 7 includes the optical grating of any of Examples 1-6, wherein each of the N optical waveguides comprises a core surrounded by a cladding; wherein an index of refraction of the core is greater than the index of refraction of the cladding.

Example 8 includes the optical grating of any of Examples 1-7, further comprising a substrate, wherein each of the N optical waveguides are on the substrate.

Example 9 includes the optical grating of any of Examples 1-8, wherein the optical grating input includes an optical waveguide input of each of the N optical waveguides.

Example 10 includes a method for emitting an optical beam from an optical grating, the method comprising: receiving, at an optical grating input of the optical grating, a collimated optical signal propagating parallel to a first axis; and emitting the optical beam from an aperture of the optical grating; wherein the optical grating is in a plane defined by the first axis and a second axis orthogonal to the first axis and comprises: a N optical waveguides each of which comprises a waveguide input, a waveguide end, and an optical grating portion comprising a grating input and a grating end, wherein N is an integer greater than one, wherein the aperture is defined by optical grating portions; wherein each optical waveguide is in the plane and parallel with each of other optical waveguides of the N optical waveguides; at least one of: at least one of: wherein each grating input of two or more of the N optical waveguides is located at different positions along or parallel to the first axis; and wherein each grating end of at least two of the N optical waveguides is located at different positions along or parallel to the first axis; and (b) wherein a grating amplitude differs between at least two optical grating portions at at least one position along or parallel to the second axis; wherein each optical waveguide whose optical grating portion commences after to the waveguide input along or parallel to the first axis further comprises an input optical waveguide portion which has no optical gratings and which optically connects the waveguide input to the grating input.

Example 11 includes the method of Example 10, wherein the grating amplitude varies along or parallel to the first axis in at least one optical grating portion.

Example 12 includes an optical grating in a plane defined by a first axis and a second axis orthogonal to the first axis, configured to receive at an optical grating input of the optical grating a collimated optical signal propagating parallel to the first axis, further configured to emit an optical beam from optical grating portions of the optical grating, the optical grating comprising: a N optical waveguides each of which comprises a waveguide input, a waveguide end, and an optical grating portion comprising a grating input and a grating end, wherein N is an integer greater than one; wherein each optical waveguide is in the plane and parallel with each of other optical waveguides of the N optical waveguides; and at least one of: wherein each grating input of two or more of the N optical waveguides is located at different positions along or parallel to the first axis; and wherein each grating end of at least two of the N optical waveguides is located at different positions along or parallel to the first axis; and wherein a grating amplitude differs between at least two optical grating portions at at least one position along or parallel to the second axis; wherein each optical waveguide whose optical grating portion commences after to the waveguide input along or parallel to the first axis further comprises an input optical waveguide portion which has no optical gratings and which optically connects the waveguide input to the grating input.

Example 13 includes the optical grating of Example 12, wherein the grating amplitude varies along or parallel to the first axis in at least one optical grating portion.

Example 14 includes the optical grating of Example 13, wherein the grating amplitude of each optical grating portion increases along or parallel to the first axis.

Example 15 includes the optical grating of any of Examples 12-14, wherein each end waveguide portion and each input waveguide portion have same height along or parallel to a third axis as each input waveguide portion, wherein the third axis is orthogonal to each of the first and the second axes.

Example 16 includes the optical grating of any of Examples 12-15, wherein each of the N optical waveguides comprises planar optical waveguide.

Example 17 includes the optical grating of any of Examples 12-16, wherein each of the optical grating portion comprises periodically expanding and diminishing a width of optical waveguide, wherein the width is along or parallel to the second axis.

Example 18 includes the optical grating of any of Examples 12-17, wherein each of the N optical waveguides comprises a core surrounded by a cladding; wherein an index of refraction of the core is greater than the index of refraction of the cladding.

Example 19 includes the optical grating of any of Examples 12-18, further comprising a substrate, wherein each of the N optical waveguides are on the substrate.

Example 20 includes the optical grating of any of Examples 12-19, wherein the optical grating input includes an optical waveguide input of each of the N optical waveguides.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. An optical grating in a plane defined by a first axis and a second axis orthogonal to the first axis, configured to receive at an optical grating input of the optical grating a collimated optical signal propagating parallel to the first axis, further configured to emit an optical beam from an aperture of the optical grating, the optical grating comprising:
a N optical waveguides each of which comprises a waveguide input, a waveguide end, and an optical grating portion comprising a grating input and a grating end, wherein N is an integer greater than one, wherein the aperture is defined by optical grating portions;
wherein each optical waveguide is in the plane and parallel with each of other optical waveguides of the N optical waveguides; and
at least one of:
(a) at least one of:
(i) wherein each grating input of two or more of the N optical waveguides is located at different positions along or parallel to the first axis; and
(ii) wherein each grating end of at least two of the N optical waveguides is located at different positions along or parallel to the first axis; and
(b) wherein a grating amplitude differs between at least two optical grating portions at at least one position along or parallel to the second axis;
wherein each optical waveguide whose optical grating portion commences after to the waveguide input along or parallel to the first axis further comprises an input optical waveguide portion which has no optical gratings and which optically connects the waveguide input to the grating input.

2. The optical grating of claim 1, wherein the grating amplitude varies along or parallel to the first axis in at least one optical grating portion.

3. The optical grating of claim 2, wherein the grating amplitude of each optical grating portion increases along or parallel to the first axis.

4. The optical grating of claim 1, wherein each end waveguide portion and each input waveguide portion have same height along or parallel to a third axis as each input waveguide portion, wherein the third axis is orthogonal to each of the first and the second axes.

5. The optical grating of claim 1, wherein each of the N optical waveguides comprises planar optical waveguide.

6. The optical grating of claim 1, wherein each of the optical grating portion comprises periodically expanding and diminishing a width of optical waveguide, wherein the width is along or parallel to the second axis.

7. The optical grating of claim 1, wherein each of the N optical waveguides comprises a core surrounded by a cladding;
wherein an index of refraction of the core is greater than the index of refraction of the cladding.

8. The optical grating of claim 1, wherein the optical grating input includes an optical waveguide input of each of the N optical waveguides.

9. A method for emitting an optical beam from an optical grating, the method comprising:
receiving, at an optical grating input of the optical grating, a collimated optical signal propagating parallel to a first axis; and
emitting the optical beam from an aperture of the optical grating;
wherein the optical grating is in a plane defined by the first axis and a second axis orthogonal to the first axis and comprises:
a N optical waveguides each of which comprises a waveguide input, a waveguide end, and an optical grating portion comprising a grating input and a grating end, wherein N is an integer greater than one, wherein the aperture is defined by optical grating portions;
wherein each optical waveguide is in the plane and parallel with each of other optical waveguides of the N optical waveguides;
at least one of:
(a) at least one of:
(i) wherein each grating input of two or more of the N optical waveguides is located at different positions along or parallel to the first axis; and
(ii) wherein each grating end of at least two of the N optical waveguides is located at different positions along or parallel to the first axis; and
(b) wherein a grating amplitude differs between at least two optical grating portions at at least one position along or parallel to the second axis;
wherein each optical waveguide whose optical grating portion commences after to the waveguide input along or parallel to the first axis further comprises an input optical waveguide portion which has no optical gratings and which optically connects the waveguide input to the grating input.

10. The method of claim 9, wherein the grating amplitude varies along or parallel to the first axis in at least one optical grating portion.
